(19) Europäisches Patentamt

European Patent Office

Office européen des brevets

(11) **EP 1 298 375 B1**

## (12) EUROPEAN PATENT SPECIFICATION

(45) Date of publication and mention
of the grant of the patent:
**02.03.2005 Bulletin 2005/09**

(51) Int Cl.⁷: **F16L 33/02**

(21) Application number: **02021887.1**

(22) Date of filing: **30.09.2002**

(54) **Hose clamp**

Schlauchklemme

Collier de serrage

(84) Designated Contracting States:
**DE FR GB IT**

(30) Priority: **01.10.2001 JP 2001305102**
**11.07.2002 JP 2002202301**

(43) Date of publication of application:
**02.04.2003 Bulletin 2003/14**

(73) Proprietor: **Togo Seisakusyo Corporation**
**Aichi-gun, Aichi 470-0162 (JP)**

(72) Inventor: **Nakamura, Yuji**
**Haruki-oaza, Togo-cho, Aichi-gun, Aichi (JP)**

(74) Representative: **Müller-Boré & Partner**
**Patentanwälte**
**Grafinger Strasse 2**
**81671 München (DE)**

(56) References cited:
**EP-A- 0 317 538       EP-A- 1 050 705**
**JP-A- 2002 276 875    US-A- 5 185 907**

**Description**

This invention relates generally to hose clamps clamping a hose end, and more particularly to a hose clamp of the type made by bending a band-shaped leaf spring into the shape of a ring.

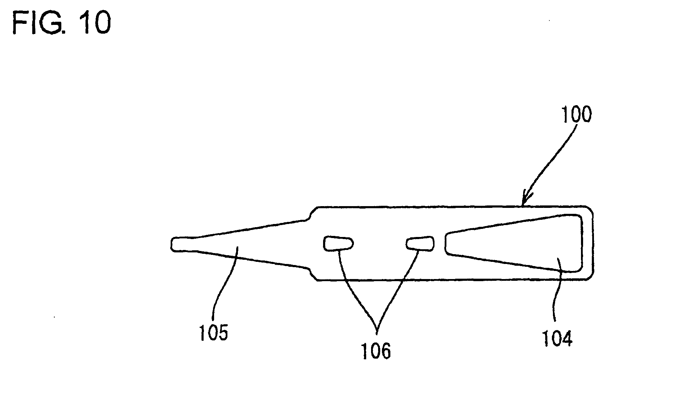

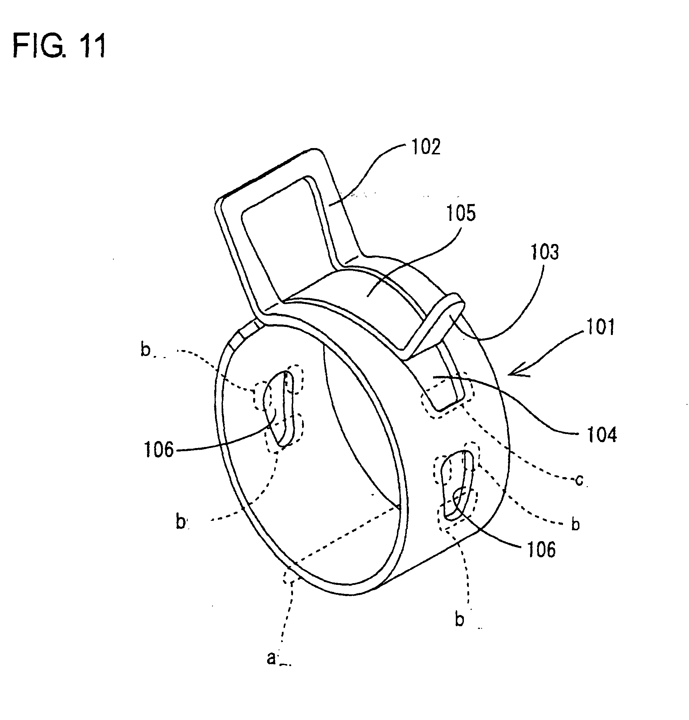

Conventional hose clamps have been made by bending a band-shaped leaf spring into the shape of a ring. FIG. 10 shows the leaf spring 100 in a developed state, whereas FIG. 11 shows an annular hose clamp 101 made by bending the leaf spring 100. The hose clamp 101 includes both ends provided with first and second grips 102 and 103 protruding radially outward, respectively. The hose clamp 101 has an opening 104 formed at one end side thereof. The end is raised midway the opening 104 so as to be formed into the first grip 102. The hose clamp 101 further has an inclined portion 105 formed at the other end side. The inclined portion 105 has a changing width. When the leaf spring 100 is bent from the developed state into the annular shape, the inclined portion 105 is caused to pass through the opening 104 and thereafter, the other end of the leaf spring 100 is raised so as to be opposed to the first grip 102, thereby serving as the second grip 103. The hose clamp has a pair of triangular windows 106 in a portion thereof between the opening 104 and the inclined portion 105. The windows 106 are arranged so that vertexes thereof confront each other. Each window has a well known structure and serves to render a clamping force circumferentially uniform.

It is desirable to convey the hose clamps 101 in their expanded state to a work cite since they can easily be fitted with hoses etc. For this purpose, the grips 102 and 103 are caused to come close to each other so that the hose clamp 101 assumes an expanded state. Thereafter, a holder (not shown) is engaged with the grips 102 and 103 to hold the grips in a close relation, whereby the hose clamp is held in the expanded state. However, the following problems remain unsolved when the conventional hose clamp is set in the expanded state. Firstly, a bending moment occurs in a bottom or portion a in FIG. 11. Furthermore, strain is increased at portions b including vertexes of each triangular window 106 and portions where curvature changes and at portions c where the width rapidly changes, such as vertexes of the opening 104. The strain is higher in the portions b and c than in the bottom (portion a) . Thus, the strain is easy to be increased in the bottom portion a), around the triangular window 106 (portions b) and around the opening 104 (portions c). In view of the circularity of the hose clamp, the strain needs to be uniformed in the portions a, b and c of the hose clamp, particularly in the portions a and b, so that a strain rate is equalized in these portions.

EP-A1-0 317 538 discloses a hose clamp, which can be provided by bending a substantially flat rectangular plate into an annular form, wherein there are further provided gripping lugs for an easy handling of the hose clamp.

It is the object of the invention to provide a hose clamp, which can improve the clamping force.

This object is fulfilled by the hose clamp having the features disclosed in claim 1. Preferred embodiments are defined in the dependent subclaims.

Advantageously, according to the present invention, there is provided a substantially symmetrical strain distribution about the Y axis.

Generally, inside an object which receives external force, the relative displacement between composition elements of the object arises simultaneously with generation of stress. This is called strain when appearing as deformation of the object. In order that a quantitative indication of strain may be obtained, a value is obtained by dividing a dimensional change due to deformation of the object by original dimension. The obtained value is called "unit strain." However, it is merely called "strain." Strain will hereinafter indicate unit strain. Accordingly, strain is non-dimensional.

The width of each of the first and second sections is gradually changed from the axis Y to each distal end such that a portion where the width rapidly changes is not provided. Accordingly, strain can be prevented from concentrating on a specific portion in the expanded state. Further, the width of the second section at the predetermined position or a dimension obtained by subtracting the width of the opening from the width of the second section at any location is approximately equal to the width of the first section at the location away from the axis Y by the predetermined distance F. Consequently, since strain distributions at the two sides of the axis Y are approximately symmetric about the axis Y, a desired circularity of the hose clamp can be ensured and the hose or the like can reliably be clamped.

The invention will be described, merely by way of example, with reference to the accompanying drawings, in which:

> FIG. 1 is a development of a hose clamp of a first embodiment in accordance with the present invention;
> FIG. 2 is a perspective view of the hose clamp;
> FIG. 3 is a development of a part of the hose clamp, explaining a ratio S concerning the position of an edge of an opening near an axis Y;
> FIG. 4 is a top plan view of the hose clamp, explaining a ratio T concerning lengths of protruding portions of first and second grips;
> FIG. 5 is a development of the hose clamp of a second embodiment in accordance with the invention;
> FIG. 6 is a partially enlarged development of a stepped portion;
> FIG. 7 is a front view of the hose clamp during bending;
> FIG. 8 is a development of the hose clamp of a third embodiment in accordance with the invention;

FIG. 9 is a FIG. 1 is a development of a modified form of the hose clamp;
FIG. 10 is a development of a conventional hose clamp; and
FIG. 11 is a perspective view of the conventional hose clamp.

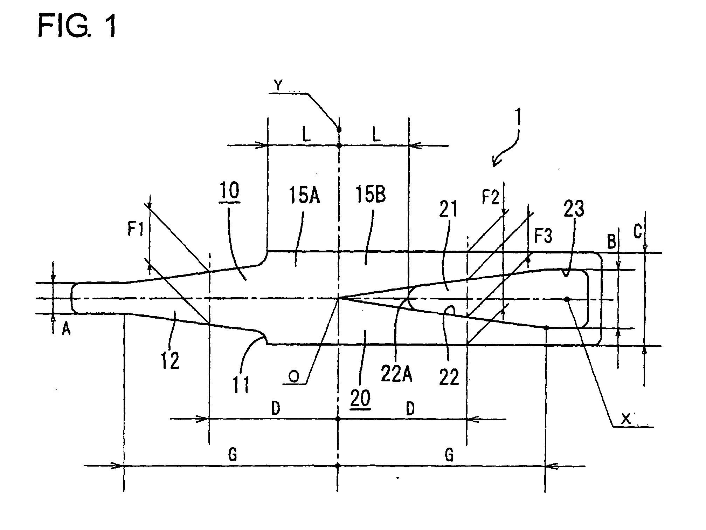

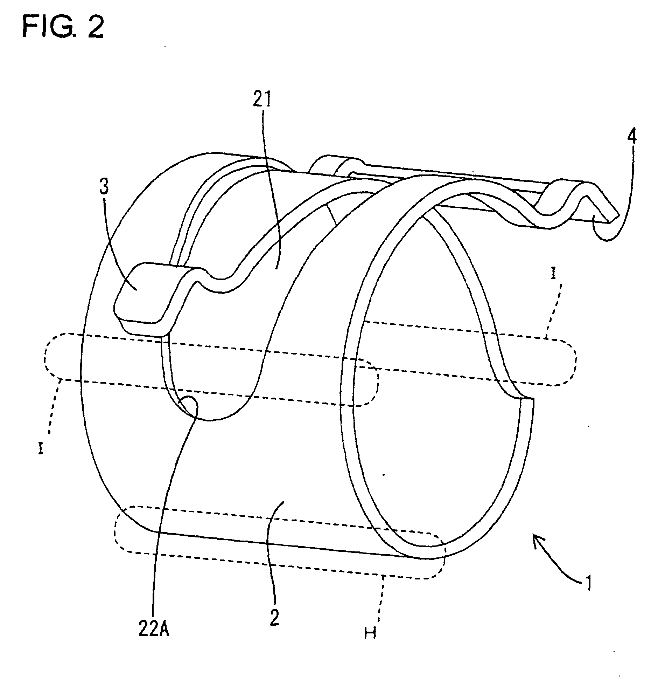

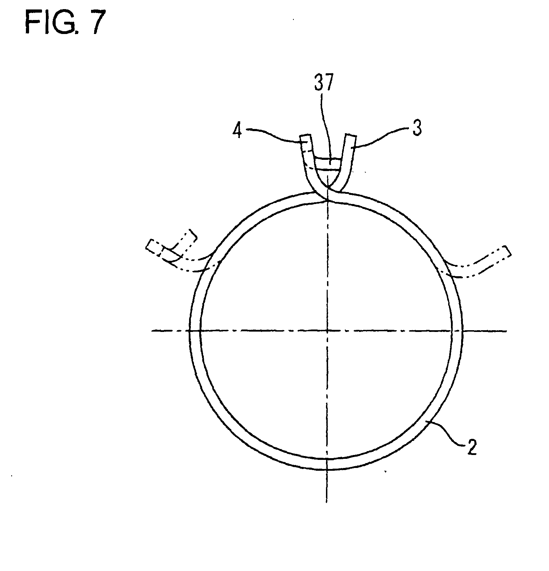

Several embodiments of the present invention will be described with reference to FIGS. 1 to 9. Referring to FIGS. 1 to 4, the hose clamp of a first embodiment in accordance with the invention is shown. The hose clamp 1 is made of a band-shaped leaf spring. The leaf spring is bent about a longitudinally central axis or axis Y in FIG. 1 into an approximately annular shape. Consequently, the hose clamp 1 comprises a clamp body 2 clamping a hose (not shown) or the like. The hose clamp 1 has both ends in which first and second grips 3 and 4 are formed, as shown in FIG. 2.

A part of the hose clamp located at a left-hand side of the axis Y will be referred to as a first section 10, whereas a part of the hose clamp located at a right-hand side of the axis Y will be referred to as a second section 20 for the sake of convenience in the description, as viewed in FIG. 1. The first section 10 is symmetric about a widthwise central axis in the extended state of the hose clamp, or axis X in FIG. 1. The first section 10 includes a base 15A extending by a dimension L from the axis Y. The base 15A has a uniform width (dimension C) . The base 15A has terminal ends formed with generally arcuate stepped portions 11 respectively. The second section 20 includes an opening 21 and a generally arcuate terminal portion 22A formed at an edge of the opening 21 located at the axis Y side. Each stepped portion 11 has a contour changing at a curvature approximately equal to that of the terminal portion 22A. Further, each stepped portion 11 is preferably chamfered for the purpose of preventing damage against an operator and hose.

A connecting portion 12 is continuous from the stepped portions 11. The width of the connecting portion 12 is gradually decreased toward a distal end of the hose clamp. The connecting portion 12 connects the base 15A to the first grip 3. A portion of the hose clamp between a location away by dimension G from the axis Y and the distal end has a uniform width. Dimension G is determined by a ratio concerning lengths of protrusion of the first and second grips 3 and 4 as will be described later. This portion is raised radially outward at a boundary between it and the connecting portion 12, thereby serving as the first grip 3. A width A of the first grip 3 is determined in view of the operability of the hose clamp.

The second section 20 also includes a base 15B extending rightward by a dimension L from the axis Y, as viewed in FIG. 1. A width of the entire second section 20 is the same as that of the base 15B. The second section 20 has a generally triangular opening 21 extending lengthwise with respect to the hose clamp and having a vertex corresponding with an intersection point O of axes X and Y. The opening 21 is symmetric about the axis X and has a start or terminal 22A away from the intersection point O by a distance L. Thus, a portion from the terminal 22A to the intersection point O is excluded from the opening 21.

The opening 21 will now be described in detail. The opening 21 includes a gradually increasing portion 22 extending from the edge thereof at the axis Y side to a predetermined position which is away from the axis Y by distance G which is equal to a distance from the axis Y to the root of the first grip 3. The width of the gradually increasing portion 22 is gradually increased. The opening 21 further includes a uniform width portion 23 extending from the end of the gradually increasing portion 22 to a distal end of the opening 21. The width of the portion 23 is uniform. The uniform width portion 23 is raised radially outward at a boundary between it and the gradually increasing portion 22 during the bending, thereby serving as the second grip 4. The edge of the opening 21 at the axis Y side is arcuate and forms the terminal 22A. Thus, the terminal is not tapered in view of the working efficiency in punching.

The first grip 3 is inserted through the uniform width portion 23 of the opening 21 during a step of forming the clamp body 2. At this time, a width B of the uniform width portion 23 is determined so that predetermined equal spaces are defined at both sides of the first grip 3 respectively. Upon determination of width B, a width C of the second section 20 is determined by adding a width required for the strength of the clamp body 2 to the width B.

The width at an optional position in the second section 20 is approximately equal to the width F1 at a position away from the axis Y by a distance from the axis Y to the optional position. Regarding the opening 21, a distance obtained by subtracting a width F3 of the opening at an optional position from a width F2 of the second section 20 at the optional position is also approximately equal to the width F1 at the position away from the axis Y by the distance from the axis Y to the optional position. For example, at position D in FIG. 1, F1=F2-F3.

The hose clamp 1 has a uniform thickness since it is made from a leaf spring. Accordingly, the first and second sections 10 and 20 equidistant from the axis Y have approximately the same thickness and approximately the same band width. Consequently, the first and second sections 10 and 20 have approximately the same sectional area. Thus, in the clamp body 2, a ratio of the sectional area to a distance from the axis Y in each of the first and second sections 10 and 20 is equal to one in the other of the sections. Accordingly, stress distribution in the clamp body 2 is substantially symmetric about the axis Y during the bending of the hose clamp 1.

Referring now to FIG. 2, the first and second sections 10 and 20 of the leaf spring are bent about the axis Y into an annular shape. The distal end of the first portion 10 is then caused to pass through the uniform width portion 23 of the second section 20. Further, the distal end of the first section 10 is raised radially outward at a predetermined position to be formed into the first grip 3, and the uniform width portion 23 of the second section 20 is also raised radially outward at a predetermined position to be formed into the second grip 4, whereby the hose clamp 1 is completed. When both grips 3 and 4 are caused to come close to each other in a natural state as shown in FIG. 2, the clamp body 2 of the hose clamp assumes an expanded state. In the expanded state, both grips 3 and 4 are held by a holder (not shown)

In consideration of the circularity of the clamp body 2, it is desirable that strain around the axis Y (portion H) should be equal to strain around the terminal portion 22A (portion I) of the opening 21. For this purpose, simulation was carried out with respect to the strain at each of the portions H and I. In the simulation, analysis was carried out by a computer with the following two factors as parameters, which factors were considered to affect strain. A strain ratio U of strain V at portion I to strain W at portion H was obtained:

$$U = (W/V) \times 100 \quad \text{when W<V}$$

$$U = (V/W) \times 100 \quad \text{when W>V}$$

The first factor was a ratio T concerning lengths of protrusion of the grips 3 and 4 obtained by the following equation:

$$T=R/Ho$$

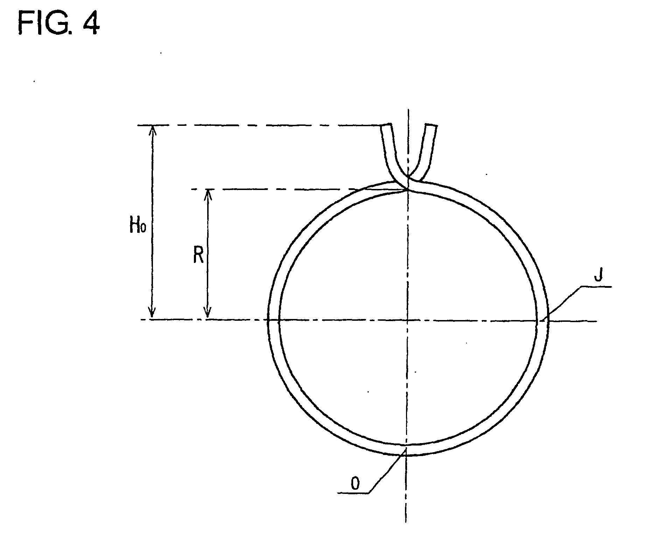

where $R=G/\pi$ (an inner diameter of the hose clamp in the expanded stated, as shown in FIG. 4) and Ho was a distance from the center of hose clamp 1 in the expanded state to each grip, as shown in FIG. 4.

The second factor was a ratio S concerning a position of the edge of the opening 21 near the axis Y:

$$S=L/Lo$$

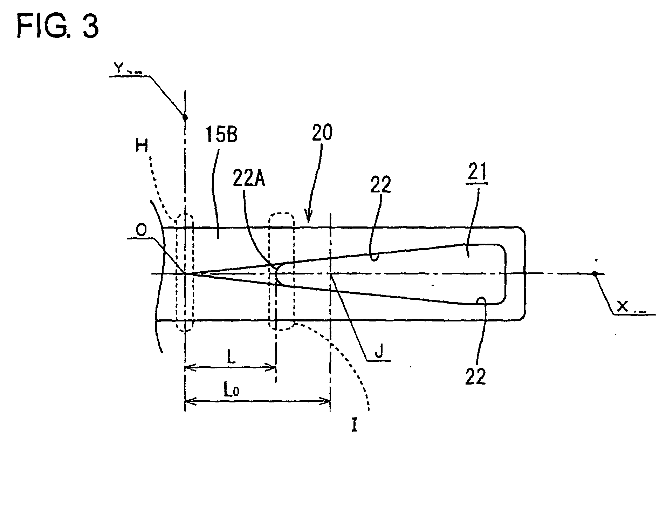

where L was the distance from the axis Y to the edge of the opening 21 near the axis Y in the expanded state as shown in FIG. 3, and Lo=G/2 (a quarter of the outer circumference of the annular portion of the hose clamp 1 in the expanded state as shown as length between O and J in FIGS. 3 and 4).

The simulation of the strain ratio U was carried out while the values of ratios T and S were varied. Consequently, the following results as shown in TABLE 1 were obtained.

TABLE 1

| Strain ratio U of amount of strain V around opening edge to amount of strain W around axis Y | | | | | | | | |
|---|---|---|---|---|---|---|---|---|
| | | Ratio T concerning length of protrusion | | | | | | |
| | | 0.5 | 0.55 | 0.613 | 0.673 | 0.75 | 0.80 | 1.0 |
| Ratio S concerning edge position | 0.9 | 66.7 | 88.9 | 88.9 | 66.7 | 55.6 | 33.3 | 20.9 |
| | 0.8 | 44.5 | 77.8 | 88.9 | 100 | 66.7 | 66.7 | 33.3 |
| | 0.7 | 44.5 | 55.6 | 66.7 | 77.8 | 88.9 | 100 | 77.8 |
| | 0.5 | 44.5 | 44.5 | 44.3 | 55.6 | 55.6 | 55.6 | 77.8 |
| | 0.34 | 44.5 | | | | | 44.5 | |

In TABLE 1, the strain ratio U exceeds 40% when T≥0.5 and S≥0.5 (setting 1). Consequently, strain can be balanced in portions H and I as compared with the conventional hose clamp as shown in FIG. 10. A sufficient area cannot be obtained for the terminal portion 22A when S≤0.5. Accordingly, problems arise in machining since the terminal portion 22A assumes a tapered shape. Further, the strain ratio U exceeds 50% when 0.7≤S≤0.9 and 0.55≤T≤0.75 (setting 2). Strain can be balanced better in portions H and I by setting 2 than by setting 1. Accordingly, the range of setting 2 provides an optimum setting for the ratios S and T. Upon determination of ratios S and T, the distances G and L and a developed form of the hose clamp can also be determined.

In the hose clamp 1 made as described above, strain is uniformed in the expanded state and accordingly, the curvature is equalized. Consequently, a desired circularity of the hose clamp can be ensured. The foregoing description relates to the strain ratio in a lower half of the clamp body 2. A desired circularity can be obtained more easily in an upper half of the clamp body 2 since a bending moment is small in the upper half portion and accordingly, an adverse effect of strain is small. Thus, the hose clamp 1 can clamp the hose, closely adhering to the entire circumference of the hose.

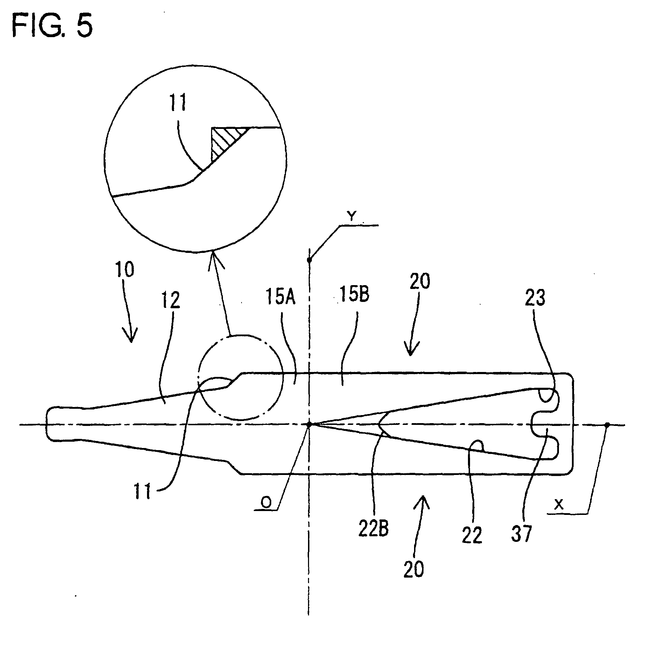

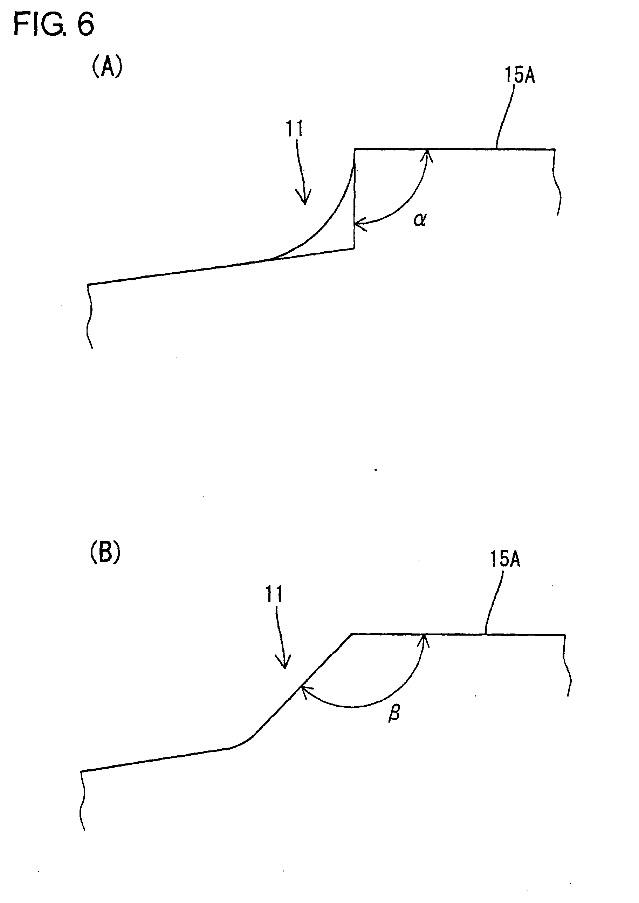

FIGS. 5 to 7 illustrate a second embodiment of the invention. The edge (terminal portion 22A) of the opening 21 at the axis Y side is arcuate in the foregoing embodiment. Further, each stepped portion 11 is also arcuate and corresponds to the terminal portion 22A in the foregoing embodiment. The junction between the outer edges of each stepped portion 11 and the base 15A has a sharp edge. More specifically, an angle $\alpha$ made between the tangential line passing the junction between the base 15A and the stepped portion 11 and the base is approximately 90°, as shown in FIG. 6A.

The second embodiment differs from the first embodiment in the shapes of the edge of the opening 21 and each stepped portion. More specifically, the edge of the opening 21 of the second section 20 is formed with a gradually changing portion 22B as shown in FIG. 5. The gradually changing portion 22B is continuous to the oblique portion 22 and has a larger gradient than the oblique portion. When the gradient of the portion 22B is thus larger, a large opening width can be ensured even in the distal end, whereby workability can be secured.

Each stepped portion 11 has a contour changing linearly and corresponding to the inclination of the gradually changing portion 22B. More specifically, the changing rate of the width of the second section 20 is equal to that of the first section 10 as in the first embodiment. Consequently, the circularity of the clamp body 2 can be ensured.

Further, the angle $\beta$ made between the outer edges of the stepped portion 11 and base 15A is obtuse as shown in FIG. 6B. Thus, the edge of the junction between the stepped portion 11 and the base 15A is not sharp but gentle. Consequently, the worker can be prevented from being damaged by the stepped portion 11 during the manufacture of the hose clamp. Further, the same effect as described above can be achieved in temporary attachment, clamping and fixing of the hose clamp 1 to a hose.

Further, an abutting piece 37 protrudes from the central rear end of the uniform width portion 23 toward the axis Y side. The abutting piece 37 is angled about 90° toward the first grip 3 side. In order that the hose may be clamped by the hose clamp 1, when the grips 3 and 4 are gripped so that the hose clamp 1 is expanded, the abutting piece 37 comes close to the side of the first grip 3. When the hose clamp 1 is excessively expanded, the abutting piece 37 abuts the first grip 3, thereby preventing an excessive expansion of the hose clamp. The other construction of the hose clamp is the same as that in the first embodiment. Identical or similar parts are labeled by the same reference symbols as those in the first embodiment. Description of these parts will be eliminated.

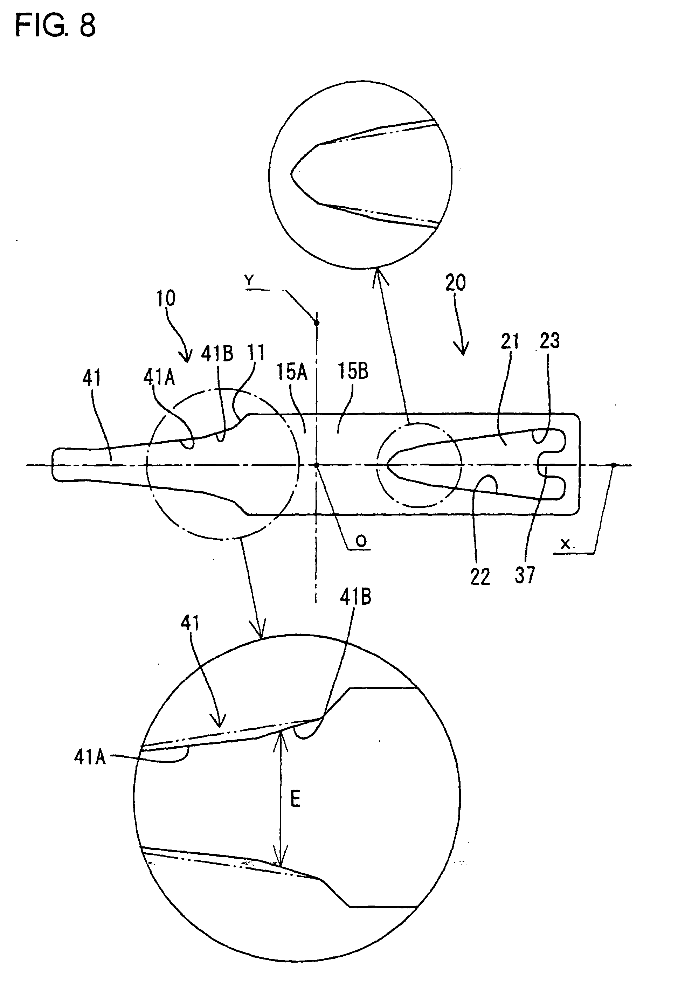

FIG. 8 illustrates a third embodiment of the invention. The inclined face of the connecting portion 12 has a constant gradient in each of the foregoing embodiments. In the third embodiment, the connecting portion 41 includes two inclined faces 41A and 41B having different gradients. The inclined face 41A located at the axis Y side is steeper whereas the inclined face 41B located at the distal end side is gentler.

Strain tends to concentrate on a portion of the hose clamp near the axis Y during the bending step. Accordingly, the portion has a larger width as shown by dimension E in FIG. 8 . The distal end side has a reduced width. Thus, the weight of the hose clamp 1 can be reduced while a desired circularity of the clamp body 2 is maintained.

Further, the inclined portion of the opening 21 also includes two inclined faces corresponding to those of the connecting portion 41. Consequently, the change rate of the width in the first section 10 is equal to the change rate of the width in the second section 20.

The other construction of the hose clamp is the same as that in the first embodiment. Identical or similar parts are labeled by the same reference symbols as those in the first embodiment. Description of these parts will be eliminated.

The hose clamp is provided with no means for holding the first and second grips during the expanded state in the first embodiment. A separate holder or the like is provided for this purpose. However, the first and second grips may be provided with holding means, instead of the separate holder.

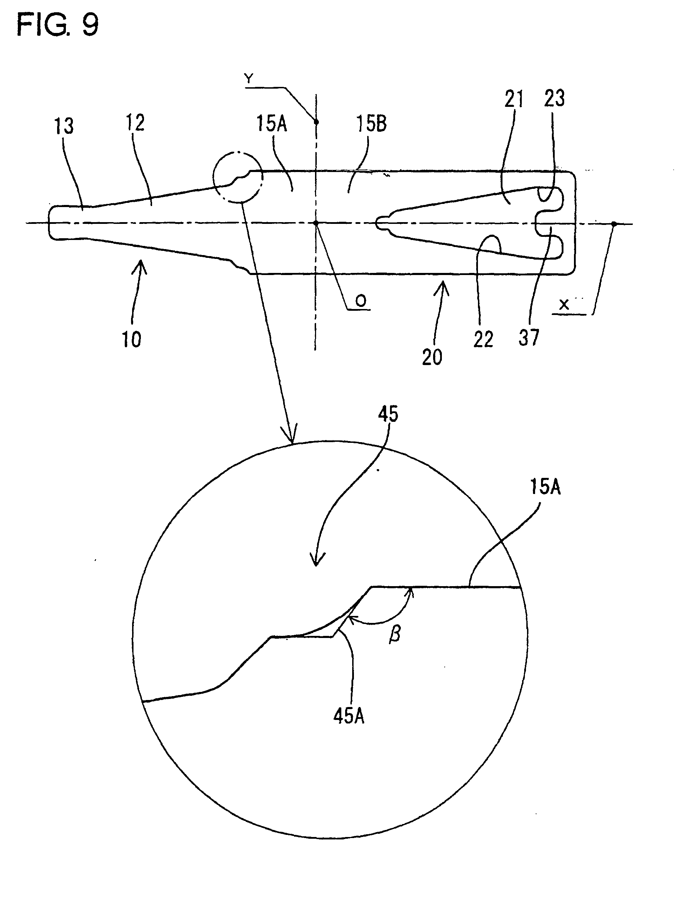

The stepped portion 11 includes the inclined face in the second embodiment. The stepped portion may have two steps as shown in FIG. 9. Further, the stepped portion 11 should not be limited to an inclined face. More specifically, the junction between the base 15A and the stepped portion 11 may be curved as shown in FIG. 9. In this case, too, the angle $\beta$ made between the tangential line passing the junction between the base 15A and the stepped portion 11 and the base is required to be obtuse.

In the third embodiment, the connecting portion 41 includes the steeper inclined face 41A at the axis Y side and the gentler inclined face 41B at the distal end side, as described above. However, the inclined face at the axis Y side may be gentler and the inclined face at the distal end side may be steeper, instead.

**Claims**

1. A hose clamp made by bending a generally flat spring material in a developed state into an annular shape, the hose clamp being elastically deformable between a natural state in which the hose clamp is capable of clamping a hose or the like and an expanded state in which the hose clamp has a larger diameter than the hose or the like, the hose clamp including a first grip (3) and a second grip (4) raised during the bending so as to protrude outward in the annular state of the spring material, the hose clamp has an axis Y which is a longitudinal central axis in the developed state and an axis X which is a transverse central axis, both axes lying in the plane of said hose clamp in the developed state
wherein a first section (10) located at one of two sides about the axis Y and having a contour symmetric about the axis X, the first section (10) having a distal end and including a tapered portion gradually tapered toward the distal end thereof, a second section (20) located at the other side about the axis Y and having a contour symmetric about the axis X, the second section (20) having a distal end, and an opening (21) formed in the second section (20) so as to extend lengthwise and so as to be symmetric about the axis X, the first section (10) being inserted through the opening (21) during the bending, **characterized in that** the opening (21) having a width changing so that a dimension obtained by subtracting F3 from F2 is equal to F1 where F2 is a width of the second section (20) at a location away from the axis Y by a predetermined distance F, F3 is a width of the opening (21) at said location, and F1 is a width of the first section (10) at a location away from the axis Y by the predetermined distance F.

2. A hose clamp according to claim 1, **characterized in that** the first and second grips (3, 4) are raised during the bending so that amounts of protrusion of the respective grips (3, 4) are equal to each other, that $T = R/Ho \geq 0.5$ where T is a ratio concerning lengths of protrusion of the first and second grips (3, 4), Ho is a distance from a center of the hose clamp to the first or second grip (3 or 4) in the developed state and R is an inner diameter of the hose clamp, and that the opening (21) has an edge (22A) near the axis Y and $S=L/Lo\geq0.5$ where S is a ratio concerning a location of the edge (22A) of the opening (21) near the axis Y, L is a length from the axis Y to the edge of the opening near the axis Y in the developed state, and Lo is a quarter of an outer circumference of the hose clamp in the annular state when the hose clamp has been deformed into the expanded state.

3. A hose clamp according to claim 2, **characterized in that** $0.7\leq S\leq0.9$ and $0.55\leq T\leq0.75$.

4. A hose clamp according to one or more of claims 1 to 3 **characterized in that** the opening (21) includes a uniform width portion (23) formed so as to have a uniform width lengthwise at the distal end side of the second section (20) and further formed so that the first grip (3) is inserted therethrough, an inclined portion (22) which is continuous to the uniform width portion (23) and is formed so that a width thereof is linearly decreased toward the axis Y, and a generally arcuate terminal portion (22A) located near the axis Y and contiguous to the inclined portion (22).

5. A hose clamp according to claim 4 further **characterized by** a base portion (15A, 15B) formed in a lengthwise central portion of the hose clamp in the developed state so as to have a uniform width and so as to extend over the first and second sections (10, 20), and a stepped portion (11) formed in a junction between the base portion (15A) and the tapered portion of the first section (10), the stepped portion (11) having a contour changing at substantially the same curvature as the terminal portion (22A) of the opening (21).

6. A hose clamp according to claim 5, **characterized in that** an angle made between a tangential line passing a junction between the base portion (15A) and the stepped portion (11) and extending to the stepped portion (11) and an outer edge of the base portion (15A) is obtuse.

7. A hose clamp according to one or more of claims 1 to 3 **characterized in that** the opening (21) includes a uniform width portion (23) formed so as to have a uniform width lengthwise at the distal end side of the second section (20) and further formed so that the first grip (3) is inserted therethrough, an inclined portion (22) which is continuous to the uniform width portion (23) and is formed so that a width thereof is linearly decreased toward the axis Y, and a generally gradually changing portion located near the axis Y and contiguous to the inclined portion (22), the gradually changing portion (22b) having a larger inclination than the inclined portion (22).

8. A hose clamp according to claim 7, further **characterized by** a base portion (15A, 15B) formed in a lengthwise central portion of the hose clamp in the developed state so as to have a uniform width and so as to extend over the first and second sections, and a stepped portion formed in a junction between the base portion (15A, 15B) and the tapered portion of the first section (10), the stepped portion (11) having a contour linearly changing according to an inclination of the gradually changing portion (22B), the stepped portion (11) including an outer edge making an obtuse angle between an outer edge of the base portion (15A, 15B) and said outer edge.

**Patentansprüche**

1. Schlauchklemme, die durch ein Biegen eines allgemein ebenen bzw. flachen Federmaterials in einem ausgelegten Zustand in einen ringförmigen Zustand gebildet ist, wobei die Schlauchklemme elastisch zwischen einem natürlichen Zustand, in welchem die Schlauchklemme fähig ist, einen Schlauch oder dgl. zu klemmen, und einem ausgeweiteten Zustand deformierbar ist, in welchem die Schlauchklemme einen größeren Durchmesser als der Schlauch oder dgl. aufweist, wobei die Schlauchklemme einen ersten Griff (3) und einen zweiten Griff (4) aufweist, die während des Biegens so angehoben sind, um nach außen in dem ringförmigen Zustand des Federmaterials vorzuragen, die Schlauchklemme eine Achse Y, welche eine Längsmittelachse in dem ausgelegten Zustand ist, und eine Achse X aufweist, welche eine querverlaufende Mittelachse ist, wobei beide Achsen in der Ebene der Schlauchklemme in dem ausgelegten Zustand liegen,

   wobei ein erster Abschnitt (10) an einer der zwei Seiten um die Achse Y liegt und eine Kontur symmetrisch um die Achse X aufweist, der erste Abschnitt (10) ein distales Ende aufweist und einen geneigten bzw. sich verjüngenden Abschnitt beinhalten, der stufenweise bzw. zunehmend zu dem distalen Ende davon verjüngt bzw. geneigt ist, ein zweiter Abschnitt (20) an der anderen Seite um die Achse Y angeordnet ist und eine Kontur symmetrisch zu der Achse X aufweist, wobei der zweite Abschnitt (20) ein distales Ende aufweist und eine Öffnung (21), die in dem zweiten Abschnitt (20) so ausgebildet ist, um sich in Längsrichtung zu erstrecken und um symmetrisch um die Achse X zu sein, wobei der erste Abschnitt (10) durch die Öffnung (21) während des Biegens eingesetzt ist, **dadurch gekennzeichnet, daß** die Öffnung (21) eine Weite bzw. Breite aufweist, die sich so verändert, daß eine Abmessung, die durch Subtrahieren von F3 von F2 erhalten ist, etwa gleich F1 ist, wobei F2 eine Breite des zweiten Abschnitts (20) an einem Ort entfernt von der Achse Y um einen vorbestimmten Abstand F ist, F3 eine Breite der Öffnung (21) an diesem Ort ist, und F1 eine Breite des ersten Abschnitts (10) an einem Ort entfernt von der Achse Y um den vorbestimmten Abstand F ist.

2. Schlauchklemme nach Anspruch 1, **dadurch gekennzeichnet, daß** der erste und zweite Griff (3, 4) während des Biegens so angehoben sind, daß Größen bzw. Ausmaße des Vorsprungs der entsprechenden Griffe (3, 4) gleich zueinander sind, daß $T = R/H_o \geqq 0,5$, wobei T ein Verhältnis betreffend Längen eines Vorsprungs des ersten und zweiten Griffs (3, 4) ist, $H_o$ ein Abstand von einer Mitte bzw. einem Zentrum der Schlauchklemme zu dem ersten oder zweiten Griff (3 oder 4) in dem ausgelegten Zustand ist, und R ein Innendurchmesser der Schlauchklemme ist, und daß die Öffnung (21) eine Kante bzw. einen Rand (22A) nahe der Achse Y aufweist, und $S = L/L_o \geqq 0,5$, wo S ein Verhältnis betreffend einen Ort der Kante (22A) der Öffnung (21) nahe der Achse Y ist, L eine Länge von der Achse Y zu der Kante der Öffnung nahe der Achse Y in dem ausgelegten Zustand ist, und $L_o$ ein Viertel eines Außenumfangs der Schlauchklemme in dem ringförmigen Zustand ist, wenn die Schlauchklemme in den expandierten Zustand deformiert wurde.

3. Schlauchklemme nach Anspruch 2, **dadurch gekennzeichnet, daß** $0,7 \leqq S \leqq 0,9$ und $0,55 \leqq T \leqq 0,75$ ist.

4. Schlauchklemme nach einem oder mehreren der Ansprüche 1 bis 3, **dadurch gekennzeichnet, daß** die Öffnung (21) einen Abschnitt (23) gleichmäßiger Breite, der so ausgebildet ist, um eine gleichmäßige bzw. einheitliche Breite in Längsrichtung an der distalen Endseite des zweiten Abschnitts (20) aufzuweisen, und weiters so ausgebildet ist, daß der erste Griff (3) dadurch eingesetzt ist, einen geneigten Abschnitt (22), welcher den Abschnitt (23) gleichmäßiger Breite fortsetzt und so ausgebildet ist, daß die Breite davon linear zu der Achse Y abnimmt, und einen allgemein gekrümmten Endabschnitt (22A) beinhaltet, welcher näher der Achse Y angeordnet ist und den geneigten Abschnitt (22) fortsetzt.

5. Schlauchklemme nach Anspruch 4, weiters **gekennzeichnet durch** einen Basisabschnitt (15A, 15B) der in einem in Längsrichtung zentralen Abschnitt der Schlauchklemme in dem entwickelten Zustand ausgebildet ist, um eine gleichmäßige Breite aufzuweisen, und um sich über den ersten und zweiten Abschnitt (10, 20) zu erstrecken, und einen abgestuften Abschnitt (11), der in einer Verbindung zwischen dem Basisabschnitt (15A) und dem geneigten Abschnitt des ersten Abschnitts (10) ausgebildet ist, wobei der abgestufte Abschnitt (11) eine Kontur aufweist, die sich mit im wesentlichen derselben Krümmung wie der terminale bzw. Endabschnitt (22A) der Öffnung (21) verändert.

6. Schlauchklemme nach Anspruch 5, **dadurch gekennzeichnet, daß** ein Winkel, der zwischen einer Tangentiallinie, die eine Verbindung zwischen dem Basisabschnitt (15A) und dem abgestuften Abschnitt (11) passiert und sich zu dem abgestuften Abschnitt (11) erstreckt, und einer Außenkante des Basisabschnitts (15A) stumpf ist.

**7.** Schlauchklemme nach einem oder mehreren der Ansprüche 1 bis 3, daß die Öffnung (21) einen Abschnitt (23) gleichmäßiger Breite, der so ausgebildet ist, um eine gleichmäßige bzw. einheitliche Breite in Längsrichtung an der distalen Endseite des zweiten Abschnitts (20) aufzuweisen, und weiterhin so ausgebildet ist, daß der erste Griff (3) dadurch eingesetzt ist, einen geneigten Abschnitt (22), welcher den Abschnitt (23) gleichmäßiger Breite fortsetzt und so ausgebildet ist, daß die Breite davon linear zu der Achse Y abnimmt, und einen allgemein sich zunehmend ändemden Endabschnitt beinhaltet, welcher nahe der Achse Y angeordnet ist und den geneigten Abschnitt (22) fortsetzt, wobei der sich zunehmend verändernde Abschnitt (22b) eine größere Neigung als der geneigte Abschnitt (22) aufweist.

**8.** Schlauchklemme nach Anspruch 7, weiters **gekennzeichnet durch** einen Basisabschnitt (15A, 15B), der in einem in Längsrichtung zentralen Abschnitt der Schlauchklemme in dem entwickelten Zustand ausgebildet ist, um eine gleichmäßige Breite aufzuweisen und um sich über den ersten und zweiten Abschnitt zu erstrecken, und einen abgestuften Abschnitt, der in einer Verbindung zwischen dem Basisabschnitt (15A, 15B) und dem geneigten bzw. sich verjüngenden Abschnitt des ersten Abschnitts (10) ausgebildet ist, wobei der abgestufte Abschnitt (11) eine Kontur aufweist, die sich linear gemäß einer Neigung des sich zunehmend ändernden Abschnitts (22B) verändert, wobei der gestufte Abschnitt (11) eine Außenkante beinhaltet, die einen stumpfen Winkel zwischen einer Außenkante des Basisabschnitts (15A, 15B) und der Außenkante ausbildet.

## Revendications

**1.** Collier de serrage fabriqué en pliant un matériau faisant ressort généralement plat dans un état développé en une forme annulaire, le collier de serrage étant élastiquement déformable entre un état naturel dans lequel le collier de serrage est capable de serrer un tuyau ou similaire et un état élargi dans lequel le collier de serrage a un diamètre plus grand que le tuyau ou similaire, le collier de serrage ayant un premier élément de saisie (3) et un deuxième élément de saisie (4) soulevés pendant le pliage de manière à faire saillie à l'extérieur dans l'état annulaire du matériau faisant ressort, le collier de serrage ayant un axe Y qui est un axe central longitudinal dans l'état développé et un axe X qui est un axe central transversal, les deux axes étant situés dans le plan dudit collier de serrage à l'état développé, dans lequel une première section (10) est située sur un des deux côtés de l'axe Y et a un contour symétrique par rapport à l'axe X, la première section (10) ayant une extrémité distale et comprenant une partie conique s'amincissant graduellement en direction de son extrémité distale, une deuxième section (20) est située de l'autre côté de l'axe Y et a un contour symétrique par rapport de l'axe X, la deuxième section (20) ayant une extrémité distale et une ouverture (21) est formée dans la deuxième section (20) de manière à s'étendre en longueur et de manière à être symétrique par rapport à l'axe X, la première section (10) étant insérée dans l'ouverture (21) pendant le pliage, **caractérisé en ce que** l'ouverture (21) a une largeur changeante de sorte qu'une dimension obtenue en soustrayant F3 de F2 est égale à F1, où F2 est une largeur de la deuxième section (20) à un endroit éloigné de l'axe Y d'une distance F prédéterminée, F3 est une largeur de l'ouverture (21) audit endroit, et F1 est une largeur de la première section (10) à un endroit éloigné de l'axe X d'une distance F prédéterminée.

**2.** Collier de serrage selon la revendication 1, **caractérisé en ce que** les premier et deuxième éléments de saisie (3, 4) sont soulevés pendant le pliage de telle sorte que les degrés de protubérance des éléments de saisie respectifs (3, 4) sont égaux l'un à l'autre, que $T = R / Ho \geq 0,5$ où T est un rapport concernant les longueurs de protubérance des première et deuxième éléments de saisie (3, 4), Ho est une distance d'un centre du collier de serrage au premier ou au deuxième élément de saisie (3, 4) à l'état développé et R est un diamètre intérieur du collier de serrage, et **en ce que** l'ouverture (21) a un bord (22A) près de l'axe Y et $S = L/Lo \geq 0,5$ où S est un rapport concernant une localisation du bord (22A) de l'ouverture (21) près de l'axe Y, L est une longueur de l'axe Y au bord de l'ouverture près de l'axe Y à l'état développé et Lo est un quart d'une circonférence extérieure du collier de serrage à l'état annulaire quand le collier de serrage a été déformé en l'état élargi.

**3.** Collier de serrage selon la revendication 2, **caractérisé en ce que** $0,7 \leq S \leq 0,9$ et $0,55 \leq T \leq 0,75$.

**4.** Collier de serrage selon une ou plusieurs des revendications 1 à 3, **caractérisé en ce que** l'ouverture (21) comprend une partie de largeur uniforme (23) formée de manière à avoir une largeur uniforme dans le sens de la longueur du côté de l'extrémité distale de la deuxième section (20) et formée en outre de telle manière que le premier élément de saisie (3) soit inséré à travers celle-ci, une partie inclinée (22) qui fait suite à la partie uniforme en largeur (23) et est formée de telle manière qu'une largeur de celle-ci diminue linéairement en direction de l'axe Y, et une partie terminale généralement arquée (22A) située près de l'axe Y et contiguë à la partie inclinée (22).

5. Collier de serrage selon la revendication 4, **caractérisé en outre par** une partie de base (15A, 15B) formée dans une partie centrale dans le sens de la longueur du collier de serrage à l'état développé de manière à avoir une largeur uniforme et de manière à s'étendre sur les première et deuxième sections (10, 20), et une partie étagée (11) formée à une jonction entre la partie de base (15A) et la partie conique de la première section (10), la partie étagée (11) ayant un contour changeant sensiblement selon la même courbure que la partie terminale (22A) de l'ouverture (21).

6. Collier de serrage selon la revendication 5, **caractérisé en ce qu'**un angle formé entre une ligne tangentielle passant par une jonction entre la partie de base (15A) et la partie étagée (11) et s'étendant jusqu'à la partie étagée (11) et un bord extérieur de la partie de base (15A) est obtus.

7. Collier de serrage selon une ou plusieurs des revendications 1 à 3, **caractérisé en ce que** l'ouverture (21) comprend une partie de largeur uniforme (23) formée de manière à avoir une largeur uniforme dans le sens de la longueur du côté de l'extrémité distale de la deuxième section (20) et formée en outre de telle manière que le premier élément de saisie (3) soit inséré à travers celle-ci, une partie inclinée (22) qui fait suite à la partie uniforme en largeur (23) et est formée de telle manière qu'une largeur de celle-ci diminue linéairement en direction de l'axe Y, et une partie changeant de manière généralement graduelle située près de l'axe Y et contiguë à la partie inclinée (22), la partie changeant graduellement (22b) ayant une plus grande inclinaison que la partie inclinée (22).

8. Collier de serrage selon la revendication 7, **caractérisé en outre par** une partie de base (15A, 15B) formée dans une partie centrale dans le sens de la longueur du collier de serrage à l'état développé de manière à avoir une largeur uniforme et de manière à s'étendre sur les première et deuxième sections (10, 20), et une partie étagée formée à une jonction entre la partie de base (15A, 15B) et la partie conique de la première section (10), la partie étagée (11) ayant un contour changeant linéairement selon une inclinaison de la partie changeant graduellement (22B), la partie étagée (11) comprenant un bord extérieur formant un angle obtus entre un bord extérieur de la partie de base (15A, 15B) et ledit bord extérieur.

FIG. 1

FIG. 2

# FIG. 3

FIG. 4

# FIG. 5

## FIG. 6

### (A)

### (B)

## FIG. 7

## FIG. 8

# FIG. 9

FIG. 10

## FIG. 11